# FASCICULE DE BREVET EUROPEEN

(11) **EP 4 110 567 B1**
(45) Date de publication et mention de la délivrance du brevet: **28.05.2025**
(21) Numéro de dépôt: 21726146.0
(22) Date de dépôt: 09.04.2021
(51) Int. Cl.: G06V 10/24, B26D 5/00, G05B 19/408, A41H 3/00, G06V 10/42, G06V 10/44

(54) **PROCÉDÉ ET SYSTÈME DE DÉTECTION AUTOMATIQUE DE POINTS CARACTÉRISTIQUES D'UN TISSU À CHEVRONS POUR LA DÉCOUPE AUTOMATIQUE DE PIÈCES**
VERFAHREN UND SYSTEM ZUR AUTOMATISCHEN ERKENNUNG CHARAKTERISTISCHER PUNKTE EINES FISCHGRÄTENGEWEBES IM HINBLICK AUF DAS AUTOMATISCHE SCHNEIDEN VON TEILEN
METHOD AND SYSTEM FOR AUTOMATICALLY DETECTING CHARACTERISTIC POINTS OF A HERRINGBONE FABRIC WITH A VIEW TO AUTOMATICALLY CUTTING PIECES

(30) Priorité: 16.04.2020 FR 2003839
(43) Date de publication de la demande: 04.01.2023
(73) Titulaire: Lectra, 75016 Paris (FR)
(72) Inventeur: MOREAU, Patrick, 33600 PESSAC (FR)
(74) Mandataire: Cabinet Beau de Loménie
(86) Numéro de dépôt international: PCT/FR2021/050631
(87) Numéro de publication internationale: WO 2021/209703

(56) Documents cités:
- EP-A1- 0 759 708
- EP-A2- 0 649 068
- EP-B1- 0 759 708
- US-A1- 2005 018 878

## Description

### Domaine Technique

L'invention se rapporte au domaine général de la coupe automatique de pièces dans un tissu à chevrons. Elle concerne plus particulièrement un procédé et un système permettant de détecter de façon automatique certains points caractéristiques des motifs à chevrons d'un tissu.

Des domaines d'application de l'invention sont notamment les industries de l'habillement et de l'ameublement.

### Technique antérieure

Lorsque la réalisation d'articles d'habillement ou d'éléments d'ameublement implique un assemblage de pièces coupées dans un tissu, il existe des contraintes particulières si le tissu est à motif. Par « tissu à motif », on entend ici toute matière textile souple en feuille imprimée avec un motif qui se répète avec des pas réguliers et prédéterminés.

Dans ce cas, il est alors souhaitable, voire nécessaire, de respecter la continuité du motif entre deux pièces assemblées, par exemple deux parties d'un vêtement cousues l'une à l'autre, ou deux pièces destinées à être voisines, par exemple deux parties de vêtement situées côte à côte lorsque le vêtement est porté, ou deux coussins d'un canapé posés côte à côte.

Afin de respecter ces contraintes, il est connu d'associer aux pièces des repères de position absolue ou relative et d'établir une hiérarchie entre pièces principales et pièces secondaires.

Un repère de position absolue est normalement associé à une pièce principale. Il caractérise le positionnement absolu de la pièce principale par rapport au motif du tissu. La position d'une pièce par rapport au motif est caractérisée par le fait qu'un point donné de la surface de la pièce occupe une position relative déterminée par rapport aux motifs qui l'entourent. Ainsi, des pièces dont les emplacements à la surface du tissu se déduisent les unes des autres par des translations d'un nombre entier de pas de motif occupent une même position par rapport au motif.

Des repères de position relative sont associés à deux pièces devant être assemblées en tenant compte d'impératifs liés à l'existence du motif. Ils identifient les emplacements de deux points de liaison devant être amenés en correspondance lors de l'assemblage des pièces.

Par exemple, dans le cas d'une veste, une pièce du dos peut constituer une pièce principale. Un repère de position absolue est éventuellement associé à la pièce du dos par exemple lorsque l'on désire qu'un motif complet soit visible en un emplacement particulier de cette pièce. Une manche, l'encolure, un devant constituent alors des pièces secondaires. Pour chacune de celles-ci, l'emplacement d'un point de raccord est déterminé pour correspondre à l'emplacement du point de raccord associé sur la pièce principale.

De plus, une pièce à laquelle est associé un repère de position relatif peut également être la pièce principale d'une ou plusieurs autres pièces. Dans ce cas, on parle alors d'une chaîne de liaisons. De même, une pièce peut avoir un repère de position absolu, relatif ou aucun dans l'axe du fil de trame, et un autre type de repère de position (relatif, absolu ou aucun) pour l'axe du fil de chaîne du tissu.

Par ailleurs, il est connu de réaliser la coupe de tissu de façon automatique. Des installations de coupe automatique sont commercialisées par la demanderesse depuis de nombreuses années.

Typiquement, un procédé de coupe automatique comprend une opération de placement qui consiste à déterminer de façon optimale les positions des pièces à couper dans une bande de tissu. Le placement est choisi de façon à minimiser les pertes de tissu tout en respectant certaines contraintes : respect du droit fil, marge minimale suffisante entre pièces, etc... Dans le cas d'un tissu à motif, s'ajoutent les contraintes liées au respect des emplacements des repères de position absolue et de position relative. Des systèmes permettant à un opérateur de définir des placements à l'aide de stations de travail informatiques et de logiciels spécialisés sont connus, y compris dans le cas de tissus à motifs.

Afin d'effectuer la coupe, le tissu est étalé sur une table de coupe en une ou plusieurs couches superposées qui peuvent être maintenues par aspiration à travers la table. La coupe est effectuée au moyen d'un outil porté par une tête dont les déplacements, par rapport à la table de coupe, sont commandés en fonction du placement prédéterminé. La coupe peut être effectuée par lame vibrante, lame rotative, laser, jet d'eau, etc.

Des difficultés apparaissent lorsque le tissu utilisé est un tissu à motif. En particulier, se pose en pratique le problème de la non-coïncidence entre le modèle de tissu utilisé pour le placement et le tissu réellement étalé sur la table de coupe. Cette non-coïncidence se traduit notamment de la façon suivante. Si l'on se place sur la table de coupe aux coordonnées d'un point de référence d'une pièce du placement, on constate que le point correspondant sur le tissu étalé n'occupe pas toujours la position relative souhaitée par rapport au motif du tissu réel. Ces écarts sont plus ou moins grands et en pratique inévitables. Ils tiennent à des défauts d'impression, des défauts de dépose de tissu sur la table de coupe, des variations de densité de fils du métier à tisser et/ou à des déformations du tissu qui peuvent se traduire par des irrégularités dans le pas de répétition et dans la géométrie du motif. Il en résulte que le placement préétabli, ou placement théorique, doit être modifié pour correspondre à la réalité du tissu étalé.

Un procédé pour effectuer cette modification de placement de façon automatique est décrit dans le document EP 0,759,708 déposé au nom de la demanderesse. Après étalement du tissu à motif sur la table de coupe, ce procédé prévoit de détecter un décalage éventuel entre le pas réel du motif sur le tissu et le pas théorique de celui-ci grâce à une saisie d'images de parties du tissu étalé puis d'une vérification sur les images saisies que des emplacements correspondant à des informations mémorisées occupent des positions voulues par rapport au motif réel du tissu étalé. Le cas échéant, le placement théorique des pièces est modifié en fonction du résultat du contrôle afin de l'adapter au pas réel du motif sur le tissu étalé prenant en compte les caractéristiques réelles du tissu.

Le procédé de découpe automatique repose donc sur la définition de repères de position absolus ou relatifs pour les pièces à découper, et sur la détection des motifs sur le tissu étalé sur la table de coupe afin d'ajuster le cas échéant le positionnement et la géométrie des pièces à découper.

Les procédés connus de l'art antérieur pour modifier de façon automatique le placement et la géométrie des pièces à découper s'adaptent parfaitement aux tissus à rayures auxquels peuvent s'apparenter les tissus à chevrons.

Les tissus à chevrons ont des armures obtenues en reproduisant, après inversion, des armures en sergé ou de dérivés de sergés qui donnent un effet de zigzags ou de dents de scie. Ces motifs de chevrons décalés sont obtenus avec des fils de trame et de chaîne de couleurs différentes et une armure sergée décalée.

Sur de tels tissus à chevrons, les algorithmes actuellement sur le marché ne permettent pas de reconnaître de façon automatique les différents points caractéristiques des chevrons pour construire numériquement une pluralité de lignes passant par les pointes des chevrons. Aussi, pour découper de tels tissus en respectant les contraintes de placement, l'opérateur de la machine de coupe doit indiquer manuellement sur l'image la position de différents points caractéristiques des chevrons. Or, cette opération de repérage manuelle est longue, fatigante pour l'opérateur et impacte fortement la productivité de l'opération de découpe.

### Exposé de l'invention

La présente invention a donc pour but de proposer un procédé de détection de points caractéristiques d'un tissu à chevrons pour la découpe automatique de pièces qui ne présente pas les inconvénients précités.

Conformément à l'invention, ce but est atteint grâce à un procédé de détection automatique de points caractéristiques d'un tissu à chevrons pour la découpe automatique de pièces, selon la revendication 1.

Le procédé selon l'invention est remarquable en ce qu'il permet, de façon automatique, de détecter la position des lignes passant par la pointe des chevrons en optimisant un critère de symétrie de deux sous-images miroir acquises le long de lignes d'opération prédéfinies. Il résulte de cette détection automatique un gain de temps considérable sur le processus de découpe. La productivité de l'opération de découpe s'en trouve grandement augmentée.

L'étape d'initialisation de la détection comprend la détermination par un opérateur d'un point initial de coordonnées correspondant au premier point de passage théorique sur la première ligne d'opération, la détermination par l'opérateur ou à partir de paramètres prédéfinis de l'espacement théorique entre deux axes de chevrons, la définition à partir du point initial des lignes d'opération perpendiculaires aux axes des chevrons, les lignes d'opération étant espacées les unes des autres d'un pas défini par l'opérateur ou à partir de paramètres prédéfinis, et la création d'une fenêtre d'analyse, initialement centrée sur le point initial, dont les dimensions sont déterminées par l'opérateur ou à partir de paramètres prédéfinis.

L'ensemble des points de passage d'axes des chevrons forme une grille déformée qui est utilisée pour repositionner et/ou déformer les pièces à découper.

Dans ce cas, l'étape de détermination des coordonnées de points de passage d'axes des chevrons comprend avantageusement le déplacement de façon itérative de la fenêtre d'analyse à l'intérieur de l'image le long de chacune des lignes d'opération.

Toujours dans ce cas, l'étape de détermination des coordonnées de points de passage d'axes des chevrons comprend de préférence le calcul de coefficients de corrélation entre les deux sous-images miroir inscrites dans la fenêtre d'analyse. L'étape de détermination des coordonnées de points de passage d'axes des chevrons peut comprendre en outre l'enregistrement des coordonnées du centre géométrique de la fenêtre d'analyse lorsque le coefficient de corrélation est maximisé en valeur absolu.

La fenêtre d'analyse peut présenter une largeur correspondant à environ 40% de l'écart entre deux axes de chevrons adjacents.

L'étape de détermination des coordonnées de points de passage d'axes des chevrons peut comprendre le calcul des coordonnées des points de passage théoriques le long des lignes d'opération.

De préférence, dans le cas de chevrons verticaux, les lignes d'opération sont horizontales, et dans le cas de chevrons horizontaux, les lignes d'opération sont verticales.

L'invention a également pour objet un système pour la détection automatique de points caractéristiques d'un tissu à chevrons pour la découpe automatique de pièces, selon la revendication 7.

### Brève description des dessins

[Fig. 1A-1B] Les figures 1A et 1B montrent des exemples de tissus à chevrons auxquels s'applique l'invention.
[Fig. 2] La figure 2 représente un exemple d'image de portion de tissu à chevrons après application du procédé selon l'invention.
[Fig. 3] La figure 3 représente un exemple d'initialisation de la détection pour la mise en œuvre du procédé de l'invention.
[Fig. 4A-4B] Les figures 4A et 4B montrent des exemples de détermination pour la mise en œuvre du procédé de l'invention.
[Fig. 5A-5D] Les figures 5A à 5D montrent différents exemples de mise en œuvre de l'étape d'optimisation d'un critère de symétrie.

### Description des modes de réalisation

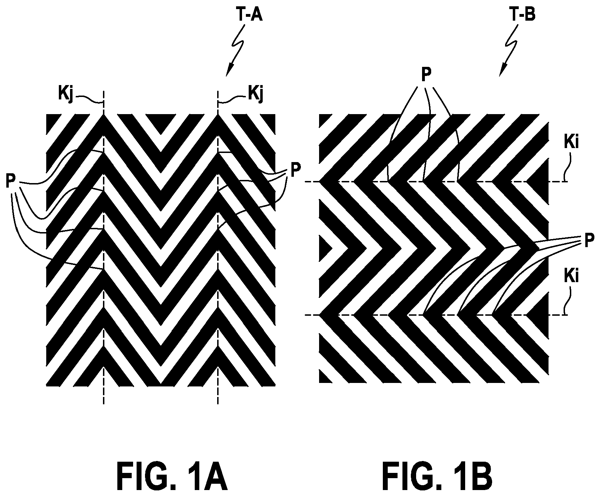

L'invention concerne la détection automatique de points caractéristiques d'un tissu à chevrons en zigzags ou dents de scie, tels que les tissus T-A et T-B représentés sur les figures 1A et 1B.

De façon connue, les tissus à chevrons sont des armures utilisées en tissage et obtenues en reproduisant, après inversion, des armures en sergé ou de dérivés de sergés.

Plus précisément, les chevrons de ces tissus T-A, T-B sont formés par des motifs en V avec des pointes P qui sont alignées selon une pluralité d'axes parallèles. Dans le cas de chevrons verticaux (figure 1A), les axes des chevrons Kj passant par les pointes P des chevrons sont des axes verticaux. Dans le cas de chevrons horizontaux (figure 1B), les axes des chevrons Ki passant par les pointes P des chevrons sont des axes horizontaux.

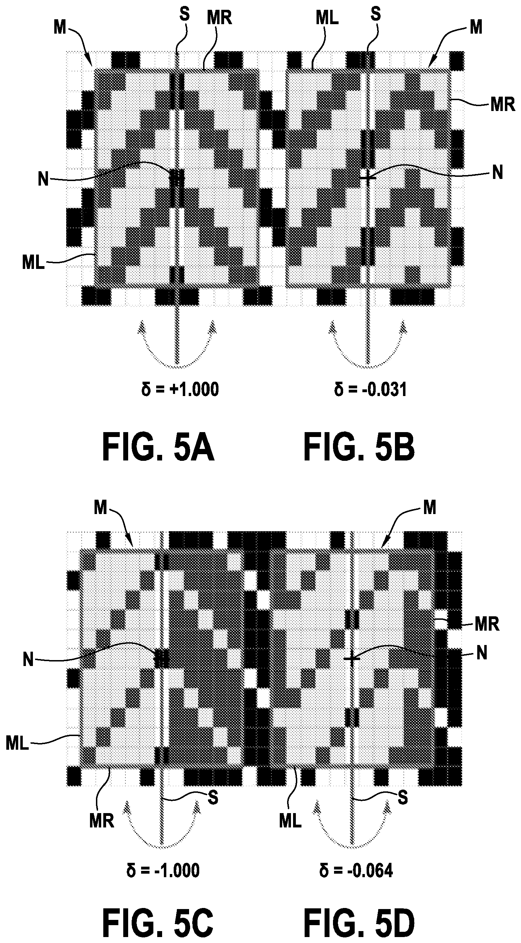

Sur l'exemple des figures 1A et 1B, les chevrons forment ainsi une succession de bandes parallèles de couleurs différentes et de même largeurs qui sont symétriques par rapport aux axes des chevrons Kj, Ki, respectivement. Bien entendu, l'invention s'applique à d'autres formes de motifs en V, notamment à motifs irréguliers et/ou à symétrie inverse comme détaillé ultérieurement en liaison avec les figures 5A à 5D.

Le procédé selon l'invention vise à reconnaître la présence de chevrons dans l'image d'une portion d'un tissu à chevrons (tels que décrits en liaison avec les figures 1A et 1B) étalé sur une table de coupe.

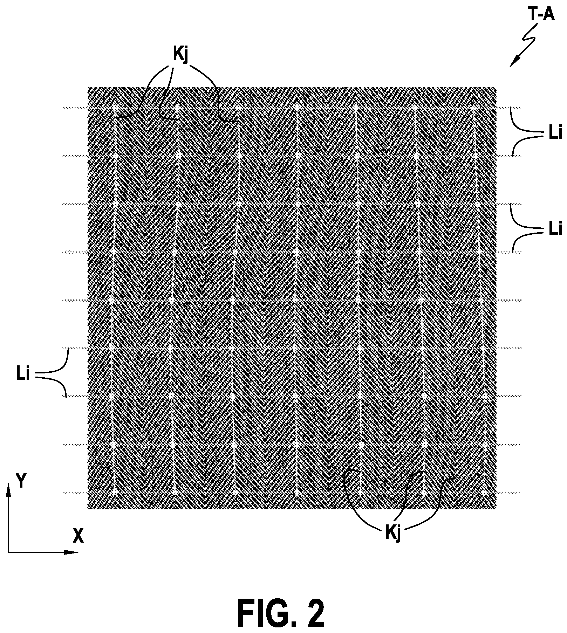

En particulier, comme représenté sur la figure 2, le procédé selon l'invention a pour objet de déterminer la position des intersections des axes Kj (ici verticaux) d'alignement des pointes des motifs en V du tissu avec une pluralité de lignes d'opération Li prédéfinies.

Les lignes d'opération sont des lignes qui sont prédéfinies par l'opérateur pour être perpendiculaires aux axes de chevrons, parallèles les unes aux autres et espacées (de préférence d'un pas régulier) les unes des autres.

Ainsi, dans le cas de la figure 2 qui montre un tissu à chevrons verticaux, les axes Kj de ces chevrons sont des lignes sensiblement verticales et les lignes d'opération Li sont des lignes horizontales.

Bien entendu, dans le cas de détection de chevrons horizontaux, les axes de ces derniers sont des lignes horizontales et les lignes d'opération sont définies pour être des lignes verticales.

Cette opération de reconnaissance selon l'invention permet de modéliser une grille reflétant des distorsions dues principalement au déroulement imparfait de la laize de tissu sur la table de coupe, cette grille déformée étant utilisée pour repositionner et/ou déformer les pièces à découper.

A cet effet, le procédé selon l'invention prévoit les étapes principales successives suivantes :
1/ Une étape d'acquisition d'une image d'une portion du tissu :
   Cette étape est réalisée de façon connue en soi en étalant le tissu sur la table de coupe pour prendre une image d'une portion de celui-ci au moyen d'un capteur d'images.
2/ Une étape d'initialisation de la détection :
   Cette étape consiste à acquérir, à partir de l'image acquise précédemment ou à partir de paramètres prédéfinis par l'opérateur, des paramètres géométriques des chevrons, ainsi qu'à définir les lignes d'opération. Cette étape est réalisée par l'opérateur au moyen d'un calculateur embarqué sur la machine de coupe ou séparé de celle-ci. Les paramètres peuvent être déterminés au dernier moment sur la machine de coupe ou être définis préalablement.
3/ Une étape de détermination des points de passage des axes des chevrons le long des lignes d'opération :
   Cette étape consiste en un algorithme automatique d'optimisation d'un critère de symétrie de deux sous-images miroir acquises le long des lignes d'opération. Elle est par exemple réalisée au niveau du calculateur utilisé lors de l'étape précédente. Elle permet d'obtenir les coordonnées de pointes des chevrons dans le tissu qui constituent des points caractéristiques du tissu à motifs.

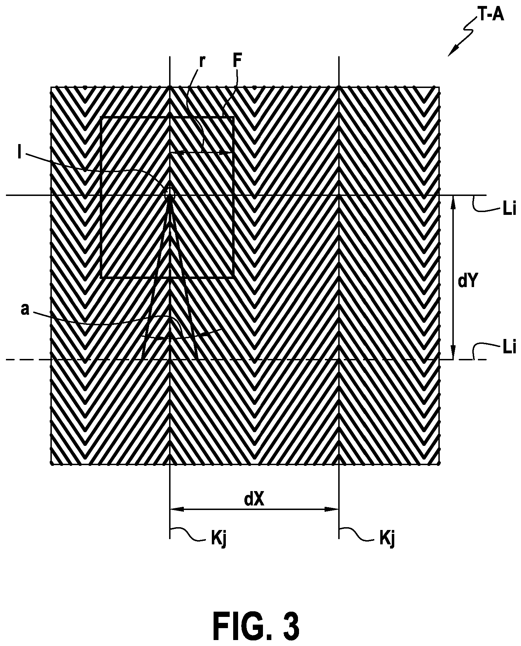

En liaison avec la figure 3, on décrira maintenant un exemple de mise en œuvre de l'étape d'initialisation de la détection selon le procédé de l'invention.

Cette étape consiste pour l'opérateur à définir un certain nombre de paramètres relatifs aux chevrons du tissu, à savoir :
- le sens des chevrons qui pourra être vertical (cas de la figure 1A) ou horizontal (cas de la figure 1B)
- un point initial I de coordonnées (xI, yI) correspondant au premier point de passage théorique sur la première ligne d'opération que l'opérateur situera approximativement sur l'image (la position du point de passage exact sera déterminé par un algorithme de recherche décrit ultérieurement)
- le pas horizontal dX correspondant, dans le cas de chevrons verticaux à l'espacement théorique horizontal entre deux axes de chevrons Kj, et dans le cas de chevrons horizontaux, à l'écart entre deux lignes d'opération verticales Lj
- le pas vertical dY correspondant, dans le cas de chevrons horizontaux à l'espacement théorique vertical entre deux axes de chevrons Ki, et dans le cas de chevrons verticaux, à l'écart entre deux lignes d'opération horizontales Li
- l'angle a d'inclinaison maximal des chevrons correspondant à l'écart d'angle maximum autorisé par rapport à la verticale pour des chevrons verticaux (respectivement à l'horizontale pour des chevrons horizontaux)
- la largeur r d'une fenêtre d'analyse F de l'image : cette valeur, qui dépend du niveau de bruit de l'image acquise, pourra être de l'ordre de 40% de l'écart entre deux axes de chevrons adjacents mais pourra être réduite pour améliorer les temps de calcul pour des images à faible bruit

Cette étape d'initialisation pourra avantageusement comporter la vérification d'une détection cohérente des chevrons verticaux (respectivement horizontaux) en s'assurant que le pas vertical dX (respectivement le pas horizontal dY) vérifie la relation suivante : (dY x tan(a) + r) est strictement inférieur à dX/2 pour des chevrons verticaux, et (dX x tan(a) + r) est strictement inférieur à dY/2 pour des chevrons horizontaux.

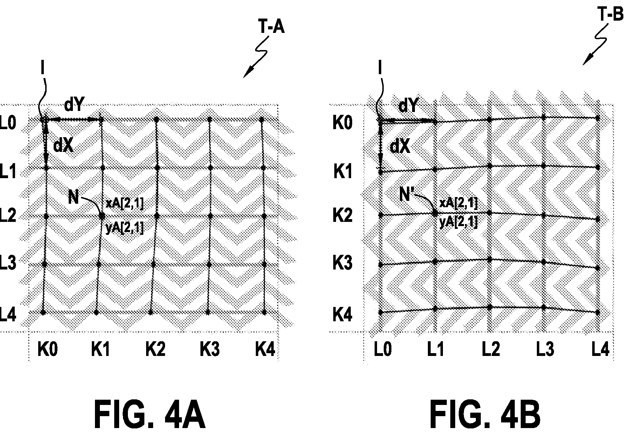

En liaison avec les figures 4A et 4B, on décrira maintenant un exemple d'algorithme de mise en œuvre de l'étape de détermination des points de passage conforme au procédé selon l'invention pour des chevrons verticaux (figure 4A) et pour des chevrons horizontaux (figure 4B).

Pour les chevrons verticaux (figure 4A), les lignes d'opération Li sont des lignes horizontales d'espacement régulier dY et numérotées par exemple de haut en bas de l'image, la première ligne d'opération L0 (i=0) étant choisie pour passer par le point initial I préalablement défini et de coordonnées (xI, yI).

Les axes des chevrons Kj sont des lignes à tendance verticale qui sont numérotées, par exemple de gauche à droite de l'image, le premier axe de chevrons étant numéroté K0 (j=0). Les points de passage théoriques N du j-ième axe de chevrons avec la i-ième ligne d'opération sont les points de coordonnées xA(i,j), yA(i, j) avec i variant de 0 au nombre de lignes d'opération.

De même, pour les chevrons horizontaux (figure 4B), les lignes d'opération Lj sont des lignes verticales d'espacement régulier dX et numérotées par exemple de gauche à droite de l'image, la première ligne d'opération L0 (j=0) étant choisie pour passer par le point initial I préalablement défini et de coordonnées (xI, yI).

Les axes des chevrons Ki sont des lignes à tendance horizontale qui sont numérotées, par exemple de haut en bas de l'image, le premier axe de chevrons étant numéroté K0 (i=0). Les points de passage théoriques N' du i-ième axe de chevrons avec la j-ième ligne d'opération sont les points de coordonnées xA(i,j), yA(i, j) avec j variant de 0 au nombre de lignes d'opération.

L'étape de détermination du procédé selon l'invention consiste à déplacer de façon itérative la fenêtre d'analyse F préalablement définie le long des différentes lignes d'opération Li, Lj à l'intérieur de l'image en partant du point initial I prédéfini.

La fenêtre d'analyse est déplacée à chaque itération d'une distance correspondant au pas vertical dX (pour les chevrons verticaux) et au pas horizontal dY (pour les chevrons horizontaux).

Au cours du déplacement de la fenêtre d'analyse, l'algorithme calcule les coordonnées des points de passage xA(i,j), yA(i, j) des axes des chevrons avec les lignes d'opération.

A cet effet, à chaque itération, l'algorithme calcule un coefficient de corrélation entre deux sous-images miroir inscrites dans la fenêtre d'analyse F. Lorsque le coefficient de corrélation ainsi calculé est maximisé en valeur absolu, les coordonnées du centre géométrique de la fenêtre d'analyse F correspondent à celles du point de passage théorique N de l'axe des chevrons correspondant avec la ligne d'opération correspondante.

Dans une image scannée, la probabilité de passage d'un axe de chevron vertical en un point de passage sera d'autant plus importante que les portions d'image situées de part et d'autre de la verticale passant par ce point seront symétriques l'une de l'autre (à l'inversion de luminance près).

Comme représenté sur les figures 5A à 5D, pour calculer cette probabilité, l'algorithme considère, à partir de la sous-image carrée M inscrite dans la fenêtre d'analyse et centrée sur un point de passage théorique xA, les deux sous-images à gauche ML et à droite MR de l'axe de symétrie S passant par le point de passage théorique N.

L'algorithme calcule alors le coefficient de corrélation δ entre la sous-image ML et la sous-image MR (miroir de ML). Le calcul de ce coefficient de corrélation δ est effectué à partir de tableaux contenant les séries de luminances t1, t2 des deux sous-images ML, MR, respectivement, et son résultat est typiquement donné par la formule mathématique suivante : δ = Cov (t1, t2) / e1 x e2 ; dans laquelle « Cov » désigne la covariance entre les séries t1 et t2, et e1 et e2 désignent l'écart type des séries t1 et t2, respectivement.

L'interprétation du résultat obtenu est la suivante :
1/ Lorsque le résultat obtenu est égal ou proche de +1 (cas de la figure 5A) : il s'agit d'une symétrie entre les deux sous-images ML et MR par rapport à l'axe S. Ce résultat indique donc la présence de chevrons et l'axe de symétrie S est considéré comme un axe de chevrons Ki. Les coordonnées du centre géométrique de la fenêtre d'analyse sont mémorisées.
2/ Lorsque le résultat obtenu est égal ou proche de 0 (positivement ou négativement - cas des figures 5B et 5D) : il s'agit d'une dissymétrie entre les deux sous-images ML et MR par rapport à l'axe S. Ce résultat indique que l'axe de symétrie S n'est pas un axe de chevrons.
3/ Lorsque le résultat obtenu est égal ou proche de -1 (cas de la figure 5C) : il s'agit d'une symétrie avec inversion des luminances (i.e. à un pixel foncé correspond un pixel clair et inversement) entre les deux sous-images ML et MR par rapport à l'axe de symétrie S. Ce résultat indique donc la présence de chevrons avec une inversion de luminance et l'axe de symétrie S est considéré comme un axe de chevrons Ki. Les coordonnées du centre géométrique de la fenêtre d'analyse sont mémorisées.

Ainsi, la présence de chevrons sera confirmée pour un coefficient de corrélation proche de 1 en valeur absolu. Dans cette situation, les coordonnées du centre géométrique de la fenêtre d'analyse seront systématiquement mémorisées car correspondant à la position de pointes de chevrons sur le tissu.

On notera que la fenêtre d'analyse peut être déplacée le long d'une ligne d'opération de pixel en pixel. Dans ce cas, pour chaque pixel, l'algorithme calcule le coefficient de corrélation des deux sous-images de part et d'autre de l'axe de symétrie, ce qui donne une courbe du coefficient de corrélation en fonction de la position le long de la ligne d'opération. Cette courbe présente des maximums locaux chaque fois que la fenêtre d'analyse est centrée sur un axe de chevrons. Les coordonnées du centre géométrique de la fenêtre d'analyse lorsque ces maximaux sont atteints sont systématiquement mémorisées.

On notera également que l'ensemble des points de passage N, N' des axes des chevrons forme une grille telle que représentée sur la figure 2 qui est déformée par rapport à une grille théorique qui aurait été élaborée à partir d'un pas régulier entre les pointes de chevrons et d'un alignement régulier des pointes de chevrons selon des droites parallèles. Cette grille déformée est ainsi utilisée pour repositionner et/ou déformer les pièces à découper.

## Revendications

1. Procédé de détection automatique de points
caractéristiques d'un tissu à chevrons (T-A ; T-B) pour la découpe automatique de pièces, les chevrons étant formés par des motifs en V avec des pointes (P) qui sont alignées selon une pluralité d'axes parallèles, le procédé comprenant :
- une étape d'acquisition d'une image d'une portion du tissu ;
- une étape d'initialisation de la détection comprenant :
∘ l'acquisition, à partir de paramètres prédéfinis par l'opérateur, de paramètres géométriques des chevrons comprenant le sens vertical ou horizontal des chevrons, un point initial (I) de coordonnées (xI, yI) correspondant au premier point de passage théorique sur la première ligne d'opération, et un espacement théorique (dX, dY) entre deux axes de chevrons (Ki, Kj), et
∘ la définition de lignes d'opération (Li, Lj) perpendiculaires aux axes des chevrons (Ki, Kj) et espacées les unes des autres d'un pas défini par l'opérateur ou à partir de paramètres prédéfinis ; et
∘ la création d'une fenêtre d'analyse (F), initialement centrée sur le point initial (I), dont les dimensions sont déterminées par l'opérateur ou à partir de paramètres prédéfinis ;
- une étape de détermination dans l'image des coordonnées de points de passage (N, N') d'axes des chevrons le long des lignes d'opération par le déplacement de façon itérative de la fenêtre d'analyse (F) à l'intérieur de l'image le long de chacune des lignes d'opération et l'optimisation d'un critère de symétrie de deux sous-images miroir (MR, ML) acquises le long des lignes d'opération, l'ensemble des points de passage (N, N') d'axes des chevrons formant une grille déformée qui est utilisée pour repositionner et/ou déformer les pièces à découper.

2. Procédé selon la revendication 1, dans lequel l'étape de détermination des coordonnées de points de passage d'axes des chevrons comprend le calcul de coefficients de corrélation entre les deux sous-images miroir inscrites dans la fenêtre d'analyse.

3. Procédé selon la revendication 2, dans lequel l'étape de détermination des coordonnées de points de passage d'axes des chevrons comprend en outre l'enregistrement des coordonnées du centre géométrique de la fenêtre d'analyse lorsque le coefficient de corrélation est maximisé en valeur absolu.

4. Procédé selon l'une quelconque des revendications 1 à 3, dans lequel la fenêtre d'analyse (F) présente une largeur (r) correspondant à environ 40% de l'écart entre deux axes de chevrons adjacents.

5. Procédé selon l'une quelconque des revendications 1 à 4, dans lequel l'étape de détermination des coordonnées de points de passage d'axes des chevrons comprend le calcul des coordonnées des points de passage théoriques le long des lignes d'opération.

6. Procédé selon l'une quelconque des revendications 1 à 5, dans lequel, dans le cas de chevrons verticaux, les lignes d'opération sont horizontales, et dans le cas de chevrons horizontaux, les lignes d'opération sont verticales.

7. Système pour la détection automatique de points caractéristiques d'un tissu à chevrons (T-A ; T-B) pour la découpe automatique de pièces,
les chevrons étant formés par des motifs en V avec des pointes (P) qui sont alignées selon une pluralité d'axes parallèles, le système comprenant :
- des moyens d'acquisition d'une image d'une portion du tissu ;
- des moyens d'initialisation de la détection comprenant, à partir de paramètres prédéfinis par l'opérateur, l'acquisition de paramètres géométriques des chevrons comprenant le sens vertical ou horizontal des chevrons, un point initial (I) de coordonnées (xl,yl), correspondant au premier point de passage théorique sur la première ligne d'opération, et un espacement théorique (dX,dY) entre deux axes de chevrons (Ki,Kj), et la définition de lignes d'opération perpendiculaires (Li,Lj) aux axes des chevrons (Ki,Kj) et espacées les unes des autres d'un pas défini par l'opérateur ou à partir de paramètres prédéfinis ; et
la création d'une fenêtre d'analyse (F), initialement centrée sur le point initial (I), dont les dimensions sont déterminées par l'opérateur ou à partir de paramètres prédéfinis ;
- des moyens de détermination dans l'image des coordonnées de points de passage (N,N') d'axes des chevrons le long des lignes d'opération par le déplacement de façon itérative de la fenêtre d'analyse (F) à l'intérieur de l'image le long de chacune des lignes d'opération et l'optimisation d'un critère de symétrie de deux sous-images miroir (MR,ML) acquises le long des lignes d'opération, l'ensemble des points de passage (N,N') d'axes des chevrons formant une grille déformée qui est utilisée pour repositionner et/ou déformer les pièces à découper.

## Patentansprüche

1. Verfahren zur automatischen Erkennung von charakteristischen Punkten eines Fischgrätliniengewebes (T-A; T-B) für das automatische Zuschneiden von Teilen, wobei die Fischgrätlinien durch V-förmige Muster mit Spitzen (P) gebildet sind, die entlang einer Vielzahl von parallelen Achsen ausgerichtet sind, das Verfahren umfassend:
- einen Schritt zum Erfassen eines Bilds eines Abschnitts des Gewebes;
- einen Schritt zum Initialisieren der Erkennung, umfassend:
∘ Erfassen, anhand von Parametern, die durch den Bediener vordefiniert sind, von geometrischen Parametern der Fischgrätlinien, umfassend die vertikale oder horizontale Richtung der Fischgrätlinien, einen Anfangspunkt (I) von Koordinaten (xI, yI), der dem ersten theoretischen Durchgangspunkt auf der ersten Bearbeitungslinie entspricht, und einen theoretischen Abstand (dX, dY) zwischen zwei Fischgrätlinienachsen (Ki, Kj), und
∘ Definieren von Bearbeitungslinien (Li, Lj) senkrecht zu den Achsen der Fischgrätlinien (Ki, Kj) und die in einem Abstand voneinander angeordnet sind, der von dem Bediener oder anhand von vordefinierten Parametern definiert ist; und
∘ Erstellen eines Analysefensters (F), das anfänglich auf den Anfangspunkt (I) zentriert ist und dessen Abmessungen von dem Bediener oder anhand von vordefinierten Parametern bestimmt werden;
- einen Schritt zum Bestimmen der Koordinaten von Durchgangspunktkoordinaten (N, N') von Achsen der Fischgrätlinien entlang der Bearbeitungslinien in dem Bild durch iterative Bewegen des Analysefensters (F) innerhalb des Bild entlang jeder der Bearbeitungslinien und Optimieren eines Symmetriekriteriums von zwei gespiegelten Teilbildern (MR, ML), die entlang der Bearbeitungslinien erfasst werden, wobei die Gesamtheit der Durchgangspunkte (N, N') von Achsen der Fischgrätlinien ein verformtes Gitter bildet, das zum Neupositionieren und/oder Verformen der zu schneidenden Teile verwendet wird.

2. Verfahren nach Anspruch 1, wobei der Schritt eines Bestimmens der Koordinaten der Durchgangspunkte von Achsen der Fischgrätlinien ein Berechnen von Korrelationskoeffizienten zwischen den zwei gespiegelten Teilbildern in das Analysefenster umfasst.

3. Verfahren nach Anspruch 2, wobei der Schritt eines Bestimmens der Koordinaten der Durchgangspunkte von Achsen der Fischgrätlinien zusätzlich ein Aufzeichnen der Koordinaten der geometrischen Mitte des Analysefensters umfasst, wenn der Korrelationskoeffizient absolut maximiert ist.

4. Verfahren nach einem der Ansprüche 1 bis 3, wobei das Analysefenster (F) eine Breite (r) aufweist, die etwa 40 % des Abstands zwischen zwei benachbarten Fischgrätlinienachsen entspricht.

5. Verfahren nach einem der Ansprüche 1 bis 4, wobei der Schritt eines Bestimmens der Koordinaten der Durchgangspunkte von Achsen der Fischgrätlinien ein Berechnen der Koordinaten der theoretischen Durchgangspunkte entlang der Bearbeitungslinien umfasst.

6. Verfahren nach einem der Ansprüche 1 bis 5, wobei in dem Fall von vertikalen Fischgrätlinien die Bearbeitungslinien horizontal sind und in dem Fall von horizontalen Fischgrätlinien die Bearbeitungslinien vertikal sind.

7. System zur automatischen Erkennung von charakteristischen Punkten eines Fischgrätliniengewebes (T-A; T-B) für das automatische Zuschneiden von Teilen,
wobei die Fischgrätlinien durch V-förmige Muster mit Spitzen (P) gebildet sind, die entlang einer Vielzahl von parallelen Achsen ausgerichtet sind, das System umfassend:
- Einrichtungen zum Erfassen eines Bilds eines Abschnitts des Gewebes;
- Einrichtungen zum Initialisieren der Erkennung, umfassend, anhand von Parametern, die vom Bediener vordefiniert sind,
Erfassen von geometrischen Parametern der Fischgrätlinien, umfassend die vertikale oder horizontale Richtung der Fischgrätlinien, einen Anfangspunkt (I) von Koordinaten (xI, yI), der dem ersten theoretischen Durchgangspunkt auf der ersten Bearbeitungslinie entspricht, und einen theoretischen Abstand (dX, dY) zwischen zwei Fischgrätlinienachsen (Ki, Kj), und Definieren von senkrechten Bearbeitungslinien (Li, Lj) zu den Achsen der Fischgrätlinien (Ki, Kj) und die in einem Abstand voneinander angeordnet sind, der von dem Bediener oder anhand von vordefinierten Parametern definiert ist; und
Erstellen eines Analysefensters (F), das anfänglich auf den Anfangspunkt (I) zentriert ist und dessen Abmessungen von dem Bediener oder anhand von vordefinierten Parametern bestimmt werden;
- Einrichtungen zum Bestimmen der Koordinaten von Durchgangspunktkoordinaten (N, N') von Achsen der Fischgrätlinien entlang der Bearbeitungslinien in dem Bild durch iterative Bewegen des Analysefensters (F) innerhalb des Bild entlang jeder der Bearbeitungslinien und Optimieren eines Symmetriekriteriums von zwei gespiegelten Teilbildern (MR, ML), die entlang der Bearbeitungslinien erfasst werden, wobei die Gesamtheit der Durchgangspunkte (N, N') von Achsen der Fischgrätlinien ein verformtes Gitter bildet, das zum Neupositionieren und/oder Verformen der zu schneidenden Teile verwendet wird.

## Claims

1. A method of automatically detecting characteristic points of a herringbone pattern fabric (T-A; T-B) for automatically cutting pieces, the herringbone pattern being formed by V-shaped patterns with apexes (P) which are aligned along a plurality of parallel axes, the method comprising:
- a step of acquiring an image of a portion of the fabric;
- a detection initialization step comprising:
∘ the acquisition, from parameters predefined by the operator, of geometric parameters of the herringbones comprising the vertical or horizontal direction of the herringbones, an initial point (I) of coordinates (xI, yI) corresponding to the first theoretical crossing point on the first line of operation, and a theoretical spacing (dX, dY) between two herringbone axes (Ki, Kj), and
∘ the definition of operating lines (Li, Lj) perpendicular to the herringbone axes (Ki, Kj) and spaced from each other by an operator-defined pitch or from predefined parameters; and
∘ the creation of an analysis window (F), initially centered on the initial point (I), the dimensions of which are determined by the operator or from predefined parameters;
- a step of determining in the image the coordinates of the crossing points (N, N') of herringbone axes along the lines of operation by iteratively displacing the analysis window (F) inside the image along each of the lines of operation and optimizing a symmetry criterion of two mirror sub-images (MR, ML) acquired along the lines of operation, the set of crossing points (N, N') of the herringbone axes forming a deformed grid which is used to reposition and/or deform the parts to cut.

2. The method according to claim 1, wherein the step of determining the coordinates of the crossing points of the herringbone axes comprises the calculation of correlation coefficients between the two mirror sub-images inscribed in the analysis window.

3. The method according to claim 2, wherein the step of determining the coordinates of the crossing points of the herringbone axes further comprises the saving of coordinates of the geometric center of the analysis window when the correlation coefficient is maximized in absolute value.

4. The method according to any of claims 1 to 3, wherein the analysis window (F) has a width (r) corresponding to about 40% of the distance between two adjacent herringbone axes.

5. The method according to any of claims 1 to 4, wherein the step of determining the coordinates of the crossing points of the herringbone axes comprises the calculation of the coordinates of theoretical crossing points along the lines of operation.

6. The method according to any of claims 1 to 5, wherein in the case of vertical herringbones the lines of operation are horizontal, and in the case of horizontal herringbones, the lines of operation are vertical.

7. A system for the automatic detection of characteristic points of a herringbone pattern fabric (T-A; T-B) for the automatic cutting of pieces, the herringbones being formed by V-shaped patterns with apexes (P) which are aligned along a plurality of parallel axes, the system comprising:
- means of acquiring an image of a portion of the fabric;
- means of initializing the detection comprising, from parameters predefined by the operator, the acquisition of geometric parameters of the herringbones comprising the vertical or horizontal direction of the herringbones, an initial point (I) of coordinates (xl,yl), corresponding to the first theoretical crossing point on the first line of operation, and a theoretical spacing (dX,dY) between two herringbone axes (Ki,Kj), and the definition of lines of operation (Li,Lj) perpendicular to the herringbones axes (Ki,Kj) and spaced from each other by a pitch defined by the operator of from predefined parameters; and
the creation of an analysis window (F), initially centered on the initial point (I), the dimensions of which are determined by the operator or from predefined parameters;
- means of determining in the image, the coordinates of crossing points (N,N') of the herringbone axes along the lines of operation by iteratively moving the analysis window (F) within the image along each of the lines of operation and optimizing a symmetry criterion of two mirror sub-images (MR,ML) acquired along the lines of operation, all crossing points (N,N') of the herringbone axes forming a distorted grid which is used to cut/reposition the parts.
